# EUROPÄISCHE PATENTANMELDUNG

(11) **EP 4 818 183 A1**
(43) Veröffentlichungstag der Anmeldung: **07.10.2026**
(21) Anmeldenummer: 25167963.5
(22) Anmeldetag: 02.04.2025
(51) Int. Cl.: C07F 15/00, C07F 7/08

(54) **HERSTELLUNGSVERFAHREN FÜR AN SEINEN 3-ALLYLGRUPPEN UNSUBSTITUIERTES ODER HYDROCARBYLSUBSTITUIERTES 3-ALLYLPALLADIUM(II)-HALOGENID-DIMER**

(71) Anmelder: Heraeus Precious Metals GmbH & Co. KG, 63450 Hanau (DE)
(72) Erfinder: Unkrig-Bau, Michael, 63450 Hanau (DE); Gock, Michael, 63450 Hanau (DE); Hawlitzky, Ellen, 63450 Hanau (DE)
(74) Vertreter: Heraeus IP

(57) **Zusammenfassung**

Verfahren zur Herstellung von [(η³-CR1R2-CR3-CHR4)PdX]₂ durch Reaktion von HₐNa_{b}K_{c}(N H₄)_{d}PdX₄ mit CR1R2=CR3-CHR4-Si(R5)₃,
wobei gilt a+b+c+d=2,
wobei H, Na, K und (NH₄) für Wasserstoff, Natrium, Kalium und Ammonium stehen,
wobei X Brom (Br) oder Chlor (Cl) bedeutet,
wobei
(i) die Reste R1 und R2 unabhängig voneinander ausgewählt sind unter Wasserstoff (H), Phenyl, Methyl, Ethyl, n-Propyl, Isopropyl und den isomeren nichtcyclischen Butylresten, mit der Maßgabe, dass die Reste R1 und R2 nicht zugleich Phenyl sind,
die Reste R3 und R4 unabhängig voneinander ausgewählt sind unter H, Methyl, Ethyl und n-Propyl, und
die Reste R5 Methyl oder Ethyl sind,
oder wobei

(ii) -CR1R2- mittels eines der Reste R1 oder R2 gemeinsam mit -CR3- benachbarte Ringglieder eines als Substituent an den -CHR4-Kohlenstoff gebundenen carbocyclischen Ringsystems bilden,

der an der Bildung des carbocyclischen Ringsystems unbeteiligte Rest R2 oder R1 ausgewählt ist unter H, Phenyl, Methyl, Ethyl, n-Propyl, Isopropyl und den isomeren nichtcyclischen Butylresten,
der Rest R4 ausgewählt ist unter H, Methyl, Ethyl und n-Propyl, und
die Reste R5 Methyl oder Ethyl sind.

## Beschreibung

Die Erfindung betrifft ein Verfahren zur Herstellung von an seinen η³-Allylgruppen unsubstituiertem respektive hydrocarbylsubstituiertem η³-Allylpalladium(II)-halogenid-Dimer.

Der hierin verwendete Begriff "hydrocarbylsubstituiert" steht für "substituiert mit einem oder mehreren jeweils von Heteroatomen freien Kohlenwasserstoffresten". Im Falle mehrerer solcher Substituenten können diese gemeinsam cyclische und von Heteroatomen freie Kohlenwasserstoffstrukturen (carbocyclische Strukturen) ausbilden. Der oder die Kohlenwasserstoffsubstituenten oder Carbocyclen können gesättigt oder olefinisch und/oder aromatisch ungesättigt sein.

η³-Allylpalladium(II)-chlorid-Dimer mit der Formel [(η³-C₃H₅)PdCl]₂ bzw. [Pd(η³-allyl)Cl]₂ ist ein wichtiger Homogenkatalysator für die organische Synthese, beispielsweise bei Kreuzkupplungsreaktionen. η³-Allylpalladium(II)-chlorid-Dimer kann auch als Ausgangsmaterial für die Synthese weiterer, hochspezialisierter Palladiumkatalysatoren verwendet werden.

Verschiedene Herstellungsverfahren für η³-Allylpalladium(II)-chlorid-Dimer sind bekannt.

Beispielsweise offenbaren S. Ogoshi et al. in Organometallics 1993, 12, 578-579 die Herstellung von [(η³-C₃H₅)PdCl]₂ aus Pd(CH₃CN)₂Cl₂ und Allyltrimethylsilan in Acetonitril nach dem Schema:

2 Pd(CH₃CN)₂Cl₂ + 2 (CH₃)₃SiC₃H₅ → [(η³-C₃H₅)PdCl]₂ + 2 (CH₃)₃SiCl + 4 CH₃CN

Bei Pd(CH₃CN)₂Cl₂ handelt es sich um ein teures Ausgangsmaterial; es kann ausgehend von H₂PdCl₄ über die Schrittfolge H₂PdCl₄ → PdCl₂ → Pd(CH₃CN)₂Cl₂ hergestellt werden. Die Herstellung des [(η³-C₃H₅)PdCl]₂ erfolgt in organischer Lösung, konkret in Acetonitril, welches im Übrigen bei der Reaktion auch gebildet wird. Die Konzentration des Reaktionsgemischs ist mit 0,2 mol/L Pd in Acetonitril gering, was den Prozess unwirtschaftlich macht. Das erhaltene Reaktionsprodukt [(η³-C₃H₅)PdCl]₂ fällt aufgrund des Syntheseprozesses verunreinigt an, die Reaktion geschieht nicht vollständig oder es entsteht als Nebenprodukt ein Komplex vom Typ Pd(η³-allyl)(CH₃CN)Cl. Für die Anwendung als Homogenkatalysator ist eine möglichst hohe Produktreinheit erwünscht.

Weiterhin beispielsweise in Synt. React. Inorg. Met.-Org. Chem. 1992, 22(9), 1395-1399 offenbaren R. C. Palenik und G. J. Palenik die Herstellung von [(η³-C₃H₅)PdCl]₂ aus Kaliumtetrachloropalladat und Allylchlorid in Gegenwart von Wasser nach dem Schema:

2 K₂PdCl₄ + 2 C₃H₅Cl + 2 H2O → [(η³-C₃H₅)PdCl]₂ + 4 KCI + 4 HCl + O₂

Allylchlorid ist hochgiftig und der Umgang damit stellt eine erhebliche Gefahr dar. Die Reaktionszeit dieser Reaktion ist mit 16 bis 24 Stunden sehr lang. Die Konzentration des Reaktionsgemischs ist mit 0,18 mol/L Pd in Wasser gering, was den Prozess unwirtschaftlich macht.

Weiterhin beispielsweise in WO 2022/136049 A2 wird die Herstellung von [(η³-C₃H₅)PdCl]₂ ausgehend von [Pd₂(dvds)₃] und Allylchlorid erwähnt; "dvds" steht dabei für 1,3-Divinyl-1,1,3,3-tetramethyldisiloxan. [Pd₂(dvds)₃] ist aufwändig in der Herstellung und ist luftempfindlich. Allylchlorid ist wie schon gesagt hochgiftig und der Umgang damit stellt eine erhebliche Gefahr dar.

Aufgabe der Erfindung war es, ein verbessertes, die vorstehend erwähnten Nachteile des Standes der Technik vermeidendes Herstellungsverfahren für [(n³-C₃H₅)PdX]₂ bzw. für an den η³-Allylgruppen hydrocarbylsubstituierte Derivate von [(n³-C₃H₅)PdX]₂ zu finden. Der in der Formel [(n³-C₃H₅)PdX]₂ verwendete Buchstabe "X" steht für die Halogene Brom respektive Chlor.

Überraschenderweise gelingt die Lösung der Aufgabe durch Reaktion von Tetrabromo- oder Tetrachloropalladiumsäure und/oder mindestens einem davon abgeleiteten Salz mit an der Allylgruppe unsubstituiertem oder substituiertem Allyltrimethyl- oder Allyltriethylsilan. Konkret betrifft die Erfindung ein Verfahren zur Herstellung von [(η³-CR1R2-CR3-CHR4)PdX]₂ durch Reaktion von HₐNa_{b}K_{c}(NH₄)_{d}PdX₄ mit CR1R2=CR3-CHR4-Si(R5)₃,
wobei gilt a+b+c+d=2,
wobei H, Na, K und (NH₄) für Wasserstoff, Natrium, Kalium und Ammonium stehen,
wobei X Brom (Br) oder bevorzugt Chlor (CI) bedeutet,
wobei
   (i) die Reste R1 und R2 unabhängig voneinander ausgewählt sind unter Wasserstoff (H), Phenyl, Methyl, Ethyl, n-Propyl, Isopropyl und den isomeren nichtcyclischen Butylresten, mit der Maßgabe, dass die Reste R1 und R2 nicht zugleich Phenyl sind,
      die Reste R3 und R4 unabhängig voneinander ausgewählt sind unter H, Methyl, Ethyl und n-Propyl, und
      die Reste R5 Methyl oder Ethyl sind,
      oder wobei
   (ii) -CR1R2- mittels eines der Reste R1 oder R2 gemeinsam mit -CR3- benachbarte Ringglieder eines als Substituent an den -CHR4-Kohlenstoff gebundenen carbocyclischen Ringsystems bilden,
      der an der Bildung des carbocyclischen Ringsystems unbeteiligte Rest R2 oder R1 ausgewählt ist unter H, Phenyl, Methyl, Ethyl, n-Propyl, Isopropyl und den isomeren nichtcyclischen Butylresten,
      der Rest R4 ausgewählt ist unter H, Methyl, Ethyl und n-Propyl, und
      die Reste R5 Methyl oder Ethyl sind.

In Abschnitt (ii) des vorhergehenden Absatzes wird der Begriff "carbocyclisches Ringsystem" verwendet. Das carbocyclische Ringsystem stellt einen Substituenten am -CHR4-Kohlenstoff dar.

Bevorzugt handelt es sich bei dem Rest R4 um H, d.h. bevorzugt handelt es sich bei der -CHR4-Gruppe um -CH₂-.

Das erfindungsgemäße Verfahren umfasst die Schritte:
(1) Bereitstellen von HₐNa_{b}K_{c}(NH₄)_{d}PdX₄ und CR1R2=CR3-CHR4-Si(R5)₃, und
(2) in Kontakt Bringen der beiden in Schritt (1) bereitgestellten Reaktanden HₐNa_{b}K_{c}(NH₄)_{d}PdX₄ und CR1R2=CR3-CHR4-Si(R5)₃ in einem Reaktionsgefäß und reagieren lassen unter Bildung von [(η³-CR1R2-CR3-CHR4)PdX]₂, wobei mindestens einer der beiden Reaktanden HₐNa_{b}K_{c}(NH₄)_{d}PdX₄ und CR1R2=CR3-CHR4-Si(R5)₃ zuvor in eine mindestens ein organisches Lösungsmittel sowie gegebenenfalls Wasser enthaltende Zubereitung überführt worden ist.

In Schritt (1) der bevorzugten Ausführungsform des erfindungsgemäßen Verfahrens werden die schon erwähnten Ausgangsstoffe HₐNa_{b}K_{c}(NH₄)_{d}PdX₄ und CR1R2=CR3-CHR4-Si(R5)₃ bereitgestellt.

Gemäß dem Vorerwähnten steht die hierin wiederholt verwendete Formel HₐNa_{b}K_{c}(NH₄)_{d}PdX₄ für HₐNa_{b}K_{c}(NH₄)_{d}PdBr₄ oder bevorzugt für HₐNaₚK-(NH₄)ₐPdCl₄, wobei jeweils gilt a+b+c+d=2, d.h. die Indizes a, b, c und d können beliebige im Bereich von 0 bis 2 liegende Werte annehmen, entscheidend ist, dass die Bedingung a+b+c+d=2 erfüllt ist. Bevorzugt sind dabei die folgenden vier Varianten:

HₐNa_{b}K_{c}(NH₄)_{d}PdX₄ mit a=2 und b=c=d=0, d.h. H₂PdX₄

HₐNa_{b}K_{c}(NH₄)_{d}PdX₄ mit b=2 und a=c=d=0, d.h. Na₂PdX₄

HₐNa_{b}K_{c}(NH₄)_{d}PdX₄ mit c=2 und a=b=d=0, d.h. K₂PdX₄

HₐNa_{b}K_{c}(NH₄)_{d}PdX₄ mit d=2 und a=b=c=0, d.h. (NH₄)₂PdX₄

Insbesondere bevorzugt ist die Variante H₂PdX₄.

Alle Varianten von HₐNa_{b}K_{c}(NH₄)_{d}PdX₄ sind leicht zugänglich, sie sind entweder kommerziell erhältlich oder können vom Fachmann problemlos hergestellt werden.

Die bevorzugte Verbindung H₂PdX₄ mit X = Br oder bevorzugt mit X = Cl kann hergestellt werden durch Reaktion von Palladium mit X₂ und HX oder durch Reaktion von PdX₂ mit HX; HX steht dabei für Bromwasserstoffsäure oder bevorzugt für Salzsäure. H₂PdX₄ steht demnach für Tetrabromopalladiumsäure (H₂PdBr₄) oder bevorzugt für Tetrachloropalladiumsäure (H₂PdCl₄), jeweils als wässrige Lösung. Tetrachloropalladiumsäure ist beispielsweise bei Heraeus in Form wässriger Lösungen mit verschiedenen Palladiumgewichtsanteilen kommerziell erhältlich, beispielsweise mit Palladiumgewichtsanteilen in Stufen von 5,5 Gew.-% (Gewichts-%), 10 Gew.-%, 15 Gew.-%, 18 Gew.-%, 20 Gew.-% und 22 Gew.-%.

Die Salze Na₂PdX₄, K₂PdX₄ und (NH₄)₂PdX₄ jeweils mit X = Br oder bevorzugt mit X = CI sind entweder kommerziell erhältlich (beispielsweise von Heraeus) oder sie können hergestellt werden durch Neutralisation von H₂PdX₄ mit den entsprechenden Basen, beispielsweise in Gestalt entsprechender Oxide, Hydroxide, Carbonate. Zur Gewinnung der Salze können die wässrigen Salzlösungen anschließend eingedampft werden. Alternativ zur Herstellung durch Neutralisation ist es auch möglich, PdX₂ mithilfe von NaX, KX respektive NH₄X in Wasser unter Bildung entsprechender Salze zu lösen.

Ganz analog gelingt die Herstellung gemischter Salze (sowohl gemischte neutrale Salze als auch gemischte saure Salze) im Zuge einer entsprechenden Neutralisationsreaktion wie vorerwähnt oder ebenfalls wie vorerwähnt ausgehend von PdX₂. Beispiele für so erhältliche gemischte Salze umfassen:

HₐNa_{b}K_{c}(NH₄)_{d}PdX₄ mit c=d=0 und a+b=2, also HₐNa_{b}PdX₄,

HₐNa_{b}K_{c}(NH₄)_{d}PdX₄ mit b=d=0 und a+c=2, also HₐK_{c}PdX₄,

HₐNa_{b}K_{c}(NH₄)_{d}PdX₄ mit b=c=0 und a+d=2, also Hₐ(NH₄)_{d}PdX₄,

HₐNa_{b}K_{c}(NH₄)_{d}PdX₄ mit a=d=0 und b+c=2, also Na_{b}K_{c}PdX₄,

HₐNa_{b}K_{c}(NH₄)_{d}PdX₄ mit a=c=0 und b+d=2, also Na_{b}(NH₄)_{d}PdX₄,

HₐNa_{b}K_{c}(NH₄)_{d}PdX₄ mit a=b=0 und c+d=2, also K_{c}(NH₄)_{d}PdX₄,

HₐNa_{b}K_{c}(NH₄)_{d}PdX₄ mit d=0 und a+b+c=2, also HₐNa_{b}K_{c}PdX₄,

HₐNa_{b}K_{c}(NH₄)_{d}PdX₄ mit c=0 und a+b+d=2, also HₐNa_{b}(NH₄)_{d}PdX₄,

HₐNa_{b}K_{c}(NH₄)_{d}PdX₄ mit b=0 und a+c+d=2, also HₐK_{c}(NH₄)_{d}PdX₄,

HₐNa_{b}K_{c}(NH₄)_{d}PdX₄ mit a=0 und b+c+d=2, also Na_{b}K_{c}(NH₄)_{d}PdX₄,

und

HaNa_{b}Kc(NH₄)_{d}PdX₄ mit a+b+c+d=2.

Bei den drei jeweils gleichen Resten R5 der Silane mit der allgemeinen Formel

CR1R2=CR3-CHR4-Si(R5)₃ handelt es sich um Methyl- oder Ethylgruppen, bevorzugt Methylgruppen; dementsprechende Beispielverbindungen umfassen insbesondere folgende sieben Vertreter:

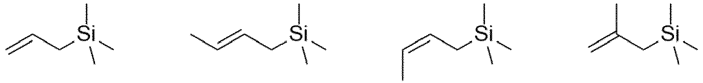

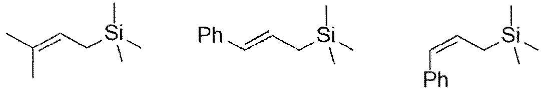

Im einfachsten und besonders bevorzugten Fall handelt es sich bei CR1R2=CR3-CHR4-Si(R5)₃ um Allyltrimethylsilan (d.h. R1 = R2 = R3 = R4 = H und R5 = Methyl). Allyltrimethylsilan ist kommerziell erhältlich, beispielsweise bei Merck; es kann hergestellt werden durch Reaktion von Allyltrichlorsilan mit dem Grignard-Reagens Methylmagnesiumbromid, wie beispielsweise in Beispiel 2 von US 3,125,554 beschrieben. Ausgehend von den entsprechenden Allyltrichlorsilanen mit der Formel CR1R2=CR3-CHR4-SiCl₃ können auch die an ihrer Allylgruppe substituierten Silane mit der Formel CR1R2=CR3-CHR4-Si(R5)₃ durch Reaktion mit dem Grignard-Reagens Methylmagnesiumbromid hergestellt werden.

In Schritt (2) des erfindungsgemäßen Verfahrens werden die in Schritt (1) bereitgestellten Ausgangsstoffe respektive die beiden Reaktanden HaNa_{b}Kc(NH₄)_{d}PdX₄ und CR1R2=CR3-CHR4-Si(R5)₃ in einem Reaktionsgefäß mit einander in Kontakt gebracht und reagieren gelassen unter Bildung von [(η³-CR1R2-CR3-CHR4)PdX]₂, wobei mindestens einer der beiden Reaktanden HaNa_{b}Kc(NH₄)_{d}PdX₄ und CR1R2=CR3-CHR4-Si(R5)₃ zuvor in eine mindestens ein organisches Lösungsmittel sowie gegebenenfalls Wasser enthaltende Zubereitung überführt worden ist. Verfahrensschritt (2) lässt sich demnach in zwei Teilschritte (2a) und (2b) zerlegen.

Das mindestens eine organische Lösungsmittel unterliegt keinen grundsätzlichen Beschränkungen hinsichtlich Stoffklassen, aus denen es ausgewählt werden kann; es sollte allerdings zweckmäßigerweise weder Methanol noch Aceton umfassen. Bevorzugt hat das mindestens eine organische Lösungsmittel einen relativ niedrigen Siedepunkt, beispielsweise nicht über 150°C. Das mindestens eine organische Lösungsmittel kann beispielsweise ausgewählt sein unter Alkoholen (zweckmäßigerweise kein Methanol), Ethern, Estern, Lactonen, chlorierten Kohlenwasserstoffen, Ketonen (zweckmäßigerweise kein Aceton), Sulfoxiden, Amiden, Carbonaten, und aromatischen Kohlenwasserstoffen. Bevorzugt ist das mindestens eine organische Lösungsmittel ausgewählt aus Alkoholen mit zwei bis zehn Kohlenstoffatomen, beispielsweise Ethanol oder insbesondere Isopropanol.

In Teilschritt (2a) wird mindestens einer der beiden Ausgangsstoffe und Reaktanden HₐNa_{b}K_{c}(NH₄)_{d}PdX₄ und CR1R2=CR3-CHR4-Si(R5)₃ zuvor in eine mindestens ein organisches Lösungsmittel sowie gegebenenfalls Wasser enthaltende Zubereitung überführt. In Teilschritt (2b) wird dann der eine Reaktand als Zubereitung oder als solcher dem anderen im Reaktionsgefäß als solchem respektive als Zubereitung vorgelegten Reaktanden zugegeben und reagieren gelassen unter Bildung von [(η³-CR1R2-CR3-CHR4)PdX]₂. Dabei sind folgende Fälle möglich und zu unterscheiden:
1. Vorlegen von HₐNa_{b}K_{c}(NH₄)_{d}PdX₄-Salz als Wasser und mindestens ein organisches Lösungsmittel enthaltende Zubereitung, Zugabe von CR1R2=CR3-CHR4-Si(R5)₃ als solches;
2. Vorlegen von HₐNa_{b}K_{c}(NH₄)_{d}PdX₄-Salz als Wasser und kein organisches Lösungsmittel enthaltende Zubereitung, Zugabe von CR1R2=CR3-CHR4-Si(R5)₃ als Zubereitung in mindestens einem organischen Lösungsmittel;
3. Vorlegen von HₐNa_{b}K_{c}(NH₄)_{d}PdX₄-Salz als Wasser und mindestens ein organisches Lösungsmittel enthaltende Zubereitung, Zugabe von CR1R2=CR3-CHR4-Si(R5)₃ als Zubereitung in mindestens einem organischen Lösungsmittel;
4. Vorlegen von H₂PdX₄ als Wasser und mindestens ein organisches Lösungsmittel enthaltende Zubereitung, Zugabe von CR1R2=CR3-CHR4-Si(R5)₃ als solches;
5. Vorlegen von H₂PdX₄ als Wasser und kein organisches Lösungsmittel enthaltende Zubereitung, Zugabe von CR1R2=CR3-CHR4-Si(R5)₃ als Zubereitung in mindestens einem organischen Lösungsmittel;
6. Vorlegen von H₂PdX₄ als Wasser und mindestens ein organisches Lösungsmittel enthaltende Zubereitung, Zugabe von CR1R2=CR3-CHR4-Si(R5)₃ als Zubereitung in mindestens einem organischen Lösungsmittel;
7. Vorlegen von HₐNa_{b}K_{c}(NH₄)_{d}PdX₄-Salz als Zubereitung in mindestens einem organischen Lösungsmittel, Zugabe von CR1R2=CR3-CHR4-Si(R5)₃ als solches;
8. Vorlegen von HₐNa_{b}K_{c}(NH₄)_{d}PdX₄-Salz als solches, Zugabe von CR1R2=CR3-CHR4-Si(R5)₃ als Zubereitung in mindestens einem organischen Lösungsmittel;
9. Vorlegen von HₐNa_{b}K_{c}(NH₄)_{d}PdX₄-Salz als Zubereitung in mindestens einem organischen Lösungsmittel, Zugabe von CR1R2=CR3-CHR4-Si(R5)₃ als Zubereitung in mindestens einem organischen Lösungsmittel;
10. Vorlegen von CR1R2=CR3-CHR4-Si(R5)₃ als solches, Zugabe von HₐNa_{b}K_{c}(NH₄)_{d}PdX₄-Salz als Wasser und mindestens ein organisches Lösungsmittel enthaltende Zubereitung;
11. Vorlegen von CR1R2=CR3-CHR4-Si(R5)₃ als Zubereitung in mindestens einem organischen Lösungsmittel, Zugabe von HₐNa_{b}K_{c}(NH₄)_{d}PdX₄-Salz als Wasser und kein organisches Lösungsmittel enthaltende Zubereitung;
12. Vorlegen von CR1R2=CR3-CHR4-Si(R5)₃ als Zubereitung in mindestens einem organischen Lösungsmittel, Zugabe von HₐNa_{b}K_{c}(NH₄)_{d}PdX₄-Salz als Wasser und mindestens ein organisches Lösungsmittel enthaltende Zubereitung;
13. Vorlegen von CR1R2=CR3-CHR4-Si(R5)₃ als solches, Zugabe von HₐNa_{b}K_{c}(NH₄)_{d}PdX₄-Salz als Zubereitung in mindestens einem organischen Lösungsmittel;
14. Vorlegen von CR1R2=CR3-CHR4-Si(R5)₃ als Zubereitung in mindestens einem organischen Lösungsmittel, Zugabe von HₐNa_{b}K_{c}(NH₄)_{d}PdX₄-Salz als solches;
15. Vorlegen von CR1R2=CR3-CHR4-Si(R5)₃ als Zubereitung in mindestens einem organischen Lösungsmittel, Zugabe von HₐNa_{b}K_{c}(NH₄)_{d}PdX₄-Salz als Zubereitung in mindestens einem organischen Lösungsmittel;
16. Vorlegen von CR1R2=CR3-CHR4-Si(R5)₃ als solches, Zugabe von H₂PdX₄ als Wasser und mindestens ein organisches Lösungsmittel enthaltende Zubereitung;
17. Vorlegen von CR1R2=CR3-CHR4-Si(R5)₃ als Zubereitung in mindestens einem organischen Lösungsmittel, Zugabe von H₂PdX₄ als Wasser und kein organisches Lösungsmittel enthaltende Zubereitung; und
18. Vorlegen von CR1R2=CR3-CHR4-Si(R5)₃ als Zubereitung in mindestens einem organischen Lösungsmittel, Zugabe von H₂PdX₄ als Wasser und mindestens ein organisches Lösungsmittel enthaltende Zubereitung.

Bei den Fällen 1. bis 6., insbesondere 4. bis 6., handelt es sich um bevorzugte Fälle.

Bei den Zubereitungen von CR1R2=CR3-CHR4-Si(R5)₃ in mindestens einem organischen Lösungsmittel handelt es sich um Lösungen.

Bei den Zubereitungen von HₐNa_{b}K_{c}(NH₄)_{d}PdX₄-Salz respektive von H₂PdX₄, kann es sich abhängig von der Natur der darin kombinierten Substanzen beispielsweise um Lösungen oder Suspensionen handeln. Der Palladiumanteil solcher Zubereitungen kann beispielsweise im Bereich von 0,5 bis 4 mol/L, bevorzugt 0,8 bis 1,6 mol/L Zubereitung liegen. Im Falle von Wasser als auch mindestens ein organisches Lösungsmittel enthaltenden Zubereitungen kann das Gewichts-Verhältnis von Wasser zum mindestens einen organischen Lösungsmittel beispielsweise im Bereich von 10:1 bis 1:10 liegen.

In Teilschritt (2b) wird dann der eine Reaktand als Zubereitung oder als solcher dem anderen im Reaktionsgefäß als solchem respektive als Zubereitung vorgelegten Reaktanden zugegeben und reagieren gelassen unter Bildung von [(η³-CR1R2-CR3-CHR4)PdX]₂.

Beim Kontakt des H₂PdX₄ respektive des HₐNa_{b}K_{c}(NH₄)_{d}PdX₄-Salzes und des CR1R2=CR3-CHR4-Si(R5)₃ kommt es zu einer exothermen Reaktion unter Bildung von [(η³-CR1R2-CR3-CHR4)PdX]₂ nach dem Schema:

2 H₂PdX₄ + 2 CR1R2=CR3-CHR4-Si(R5)₃ →[(η³-CR1R2-CR3-CHR4)PdX]₂ + 2 (R5)₃SiX + 4 HX

respektive

2 HaNa_{b}Kc(NH₄)_{d}PdX₄ + 2 CR1R2=CR3-CHR4-Si(R5)₃ → [(η³-CR1R2-CR3-CHR4)PdX]₂ + 2 (R5)₃SiX + 4 H_{a/2}Na_{b/2}K_{c/2}(NH₄)_{d/2}X

Nach erfolgter Zugabe und auch im Anschluss daran wird zweckmäßigerweise gut durchmischt, insbesondere gerührt; das gute Durchmischen ist besonders wichtig im Falle eines zwei- oder mehrphasigen Reaktionsgemischs. Die Zugabe erfolgt beispielsweise im Molverhältnis 1 bis 1,5 Mol CR1R2=CR3-CHR4-Si(R5)₃ : 1 Mol Pd; dabei kann, falls das CR1R2=CR3-CHR4-Si(R5)₃ den zuzugebenenden Reaktanden darstellt, beispielsweise so gearbeitet werden, dass die Zugabe des CR1R2=CR3-CHR4-Si(R5)₃ zunächst bis zum Erreichen eines 1:1-Molverhältnisses erfolgt, und danach zunächst ein Abreagieren innerhalb der Reaktionsmischung abgewartet wird, bevor gegebenenfalls weiteres CR1R2=CR3-CHR4-Si(R5)₃ zugegeben wird.

Angesichts der schon erwähnten Exothermie ist es zweckmäßig, während des in Kontakt Bringens der beiden Reaktanden Maßnahmen zur Verhinderung eines Temperaturanstiegs der im Reaktionsgefäß sich bildenden bzw. gebildeten Reaktionsmischung auf über 50°C zu ergreifen; Beispiele für besagte Maßnahmen umfassen übliche Maßnamen zur internen und/oder externen Kühlung. Bevorzugt kann die Temperatur in der Reaktionsmischung beispielsweise im Bereich von 20 bis 40°C gehalten werden. Neben entsprechenden Kühlungsmaßnahmen während des Zugebens des einen Reaktanden zum anderen Reaktanden und während der noch erfolgenden Reaktion kann es zweckmäßig sein, die vorgelegte Komponente zunächst auf eine Temperatur beispielsweise im Bereich von 5 bis 10°C zu kühlen und erst dann mit der Zugabe des einen Reaktanden zum anderen Reaktanden zu beginnen. Sobald keine Exothermie mehr zu beobachten ist, ist die Reaktion beendet und das gebildete Reaktionsprodukt [(η³-CR1R2-CR3-CHR4)PdX]₂ kann häufig als Feststoff mittels Fest-Flüssig-Trennverfahren abgetrennt werden; Beispiele für übliche Fest-Flüssig-Trennverfahren umfassen Dekantieren, Filtrieren und Zentrifugieren. Unnötig für den Fachmann zu erwähnen, dass die Möglichkeit des Abtrennens des [(η³-CR1R2-CR3-CHR4)PdX]₂ als Feststoff abhängig vom verwendeten CR1R2=CR3-CHR4-Si(R5)₃ und/oder beispielsweise vom ausgewählten mindestens einen organischen Lösungsmittel sein kann. Gegebenenfalls kann nach Aufkonzentrieren oder vollständigem Eindampfen der feststofffreien oder der vom Feststoff befreiten Zusammensetzung festes [(η³-CR1R2-CR3-CHR4)PdX]₂ respektive weiteres festes [(η³-CR1R2-CR3-CHR4)PdX]₂ erhalten werden. Das Aufkonzentrieren oder Eindampfen kann bei vermindertem Druck geschehen. Es ist zweckmäßig während des Aufkonzentrierens oder Eindampfens eine Temperatur von 40°C nicht zu überschreiten. Der gewonnene [(η³-CR1R2-CR3-CHR4)PdX]₂-Feststoff kann dann gewaschen und getrocknet werden; beispielsweise kann ein Waschen in üblicher Weise auf einer Nutsche erfolgen, beispielsweise mit Alkohol als Waschflüssigkeit, gegebenenfalls gefolgt von Waschen mit Petroleumbenzin. Falls der [(η³-CR1R2-CR3-CHR4)PdX]₂-Feststoff eine wasserlösliche Verunreinigung aufweist, kann zweckmäßig ein Waschschritt mit Wasser vor dem Waschen mit organischem Lösungsmittel vorgeschaltet werden. Ein Trocknen bis zum Erreichen von Massenkonstanz bei reduziertem Druck und einer Temperatur von zweckmäßigerweise nicht über 40°C kann sich anschließen.

Das erfindungsgemäße Verfahren erlaubt die Herstellung von [(η³-CR1R2-CR3-CHR4)PdX]₂ mit Ausbeuten von im Allgemeinen >90% bei Produktreinheitsgraden von im Allgemeinen ≥ 97%.

### Beispiele

Alle Reaktionen wurden in konventionellen Laborglasgeräten durchgeführt. Sämtliche Chemikalien waren kommerziell verfügbar und wurden ohne weitere Aufreinigung eingesetzt. ¹H-NMR-Spektren wurden auf einem Bruker Avance 400 Spektrometer aufgezeichnet und mit Hilfe der Software Topspin von Bruker ausgewertet.

### Ausführungsbeispiel 1a (Darstellung von n³-Allylpalladium(II)-chlorid-Dimer, [(η³-C₃H₅)PdCl]₂),

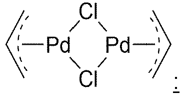

Unter Rühren wurden 231 g einer wässrigen H₂PdCl₄-Lösung mit einem Pd-Gehalt von 20 Gew.-% mit 231 mL Isopropanol versetzt. Unter Eiskühlung wurden 53 g Allyltrimethylsilan zugetropft. Nachdem die exotherme Reaktion abgeklungen war, wurden ohne Kühlung weitere 10 g Allyltrimethylsilan zugetropft. Das Reaktionsgemisch wurde für 1,5 h bei Raumtemperatur gerührt und der gebildete Feststoff wurde anschließend abfiltriert. Die Mutterlauge wurde unter vermindertem Druck bei 30°C bis zur Trockne eingedampft. Die so gewonnenen Feststoffe wurden vereint und mit 100 mL Isopropanol sowie mit 3 x 100 mL Petrolether 40-60 gewaschen. Der Feststoff wurde unter vermindertem Druck bei 40°C bis zur Massenkonstanz getrocknet. Die Ausbeute betrug 94% [(η³-C₃H₅)PdCl]₂ als gelber Feststoff.

¹H-NMR (400 MHz, CDCl₃): δ = 3.04 (d, 4H), 4.11 (d, 4H), 5.46 (tt, 2H).

### Ausführungsbeispiel 1b (Darstellung von n³-Allylpalladium(II)-chlorid-Dimer, [(η³-C₃H₅)PdCl]₂),

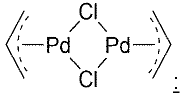

Unter Rühren wurden 13,86 g festes Na₂PdCl₄ mit 47 mL VEW (vollentsalztes Wasser) und 47 mL Isopropanol versetzt. Unter Eiskühlung wurden 5,64 g Allyltrimethylsilan zugetropft. Nachdem die exotherme Reaktion abgeklungen war, wurden ohne Kühlung weitere 1,34 g Allyltrimethylsilan zugetropft. Das Reaktionsgemisch wurde für 1 h bei Raumtemperatur gerührt und der gebildete Feststoff wurde anschließend abfiltriert. Die Mutterlauge wurde unter vermindertem Druck bei 30°C bis zur Trockne eingedampft. Die so gewonnenen Feststoffe wurden vereint und zunächst mit 2 x 25 ml VEW, danach mit 25 mL Isopropanol sowie mit 2 x 20 mL Petrolether 40-60 gewaschen. Der Feststoff wurde unter vermindertem Druck bei 40°C bis zur Massenkonstanz getrocknet. Die Ausbeute betrug 89% [(η³-C₃H₅)PdCl]₂ als gelber Feststoff.

### Ausführungsbeispiel 2 (Darstellung von (η³-1-Phenylallyl)palladium(II)-chlorid-Dimer,³-(C₆H₅)-C₃H₄)PdCl]₂,

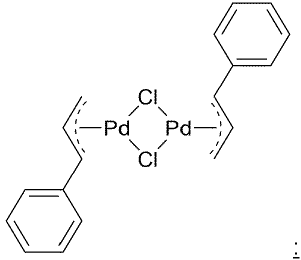

Unter Rühren wurden 220 g einer wässrigen H₂PdCl₄-Lösung mit einem Pd-Gehalt von 20 Gew.-% mit 220 mL Isopropanol versetzt. Unter Eiskühlung wurden 80 g Cinnamyltrimethylsilan (E/Z-Gemisch) zugetropft. Nachdem die exotherme Reaktion abgeklungen war, wurden ohne Kühlung weitere 20 g Cinnamyltrimethylsilan zugetropft. Das Reaktionsgemisch wurde für 1,5 h bei Raumtemperatur gerührt und der gebildete Feststoff wurde anschließend abfiltriert. Die Mutterlauge wurde unter vermindertem Druck bei 30°C bis zur Trockne eingedampft. Die so gewonnenen Feststoffe wurden vereint und mit 2 x 100 mL Isopropanol sowie mit 2 x 100 mL Petrolether 40-60 gewaschen. Der Feststoff wurde unter vermindertem Druck bei 40°C bis zur Massenkonstanz getrocknet. Die Ausbeute betrug 95% [(η³-(C₆H₅)-C₃H₄)PdCl]₂ als gelber Feststoff.

¹H-NMR (400 MHz, CDCl₃): δ = 3.04 (d, 2H), 3.96 (d, 2H), 4.63 (d, 2H), 5.80 (ddd, 2H), 7.24-7.30 (m, 4H), 7.31-7.38 (m, 2H), 7.47-7.52 (m, 4H).

### Ausführungsbeispiel 3: Darstellung von (η³-1-Methylallyl)palladium(II)-chlorid-Dimer, [η³-(CH₃)-C₃H₄)PdCl]₂,

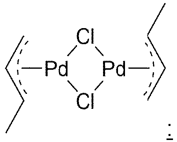

Unter Rühren wurden 25 g einer wässrigen H₂PdCl₄-Lösung mit einem Pd-Gehalt von 20 Gew.-% mit 25 mL Isopropanol versetzt. Unter Eiskühlung wurden 6,4 g Crotyltrimethylsilan (E/Z-Gemisch) zugetropft. Nachdem die exotherme Reaktion abgeklungen war, wurden ohne Kühlung weitere 1,2 g Crotyltrimethylsilan zugetropft. Das Reaktionsgemisch wurde für 30 min bei Raumtemperatur gerührt und der gebildete Feststoff wurde anschließend abfiltriert. Die Mutterlauge wurde unter vermindertem Druck bei 30°C bis zur Trockne eingedampft. Die so gewonnenen Feststoffe wurden vereint und mit 2 x 20 mL Isopropanol sowie mit 2 x 20 mL Petrolether 40-60 gewaschen. Der Feststoff wurde unter vermindertem Druck bei 40°C bis zur Massenkonstanz getrocknet. Die Ausbeute betrug 93% [(η³-(CH₃)-C₃H₄)PdCl]₂ als gelber Feststoff.

¹H-NMR (400 MHz, CDCl₃): δ = 1.32 (d, 6H), 2.81 (d, 2H), 3.85-3.94 (m, 4H), 5.28 (dt, 2H).

## Patentansprüche

1. Verfahren zur Herstellung von [(η³-CR1R2-CR3-CHR4)PdX]₂ durch Reaktion von HₐNa_{b}K_{c}(NH₄)_{d}PdX₄ mit CR1R2=CR3-CHR4-Si(R5)₃,
wobei gilt a+b+c+d=2,
wobei H, Na, K und (NH₄) für Wasserstoff, Natrium, Kalium und Ammonium stehen,
wobei X Brom (Br) oder Chlor (CI) bedeutet,
wobei
(i) die Reste R1 und R2 unabhängig voneinander ausgewählt sind unter Wasserstoff (H), Phenyl, Methyl, Ethyl, n-Propyl, Isopropyl und den isomeren nichtcyclischen Butylresten, mit der Maßgabe, dass die Reste R1 und R2 nicht zugleich Phenyl sind,
die Reste R3 und R4 unabhängig voneinander ausgewählt sind unter H, Methyl, Ethyl und n-Propyl, und
die Reste R5 Methyl oder Ethyl sind,
oder wobei
(ii) -CR1R2- mittels eines der Reste R1 oder R2 gemeinsam mit -CR3- benachbarte Ringglieder eines als Substituent an den -CHR4-Kohlenstoff gebundenen carbocyclischen Ringsystems bilden,
der an der Bildung des carbocyclischen Ringsystems unbeteiligte Rest R2 oder R1 ausgewählt ist unter H, Phenyl, Methyl, Ethyl, n-Propyl, Isopropyl und den isomeren nichtcyclischen Butylresten,
der Rest R4 ausgewählt ist unter H, Methyl, Ethyl und n-Propyl, und
die Reste R5 Methyl oder Ethyl sind.

2. Verfahren nach Anspruch 1 umfassend die Schritte:
(1) Bereitstellen von HaNa_{b}Kc(NH₄)_{d}PdX₄ und CR1R2=CR3-CHR4-Si(R5)₃, und
(2) in Kontakt Bringen der beiden in Schritt (1) bereitgestellten Reaktanden HaNa_{b}Kc(NH₄)_{d}PdX₄ und CR1R2=CR3-CHR4-Si(R5)₃ in einem Reaktionsgefäß und reagieren lassen unter Bildung von [(η³-CR1R2-CR3-CHR4)PdX]₂, wobei mindestens einer der beiden Reaktanden HₐNa_{b}K_{c}(NH₄)_{d}PdX₄ und CR1R2=CR3-CHR4-Si(R5)₃ zuvor in eine mindestens ein organisches Lösungsmittel sowie gegebenenfalls Wasser enthaltende Zubereitung überführt worden ist.

3. Verfahren nach Anspruch 2, wobei das mindestens eine organische Lösungsmittel ausgewählt ist aus Alkoholen mit zwei bis zehn Kohlenstoffatomen.

4. Verfahren nach einem der vorhergehenden Ansprüche, wobei HaNa_{b}Kc(NH₄)_{d}PdX₄ Na₂PdX₄ (b=2 und a=c=d=0), K₂PdX₄ (c=2 und a=b=d=0), (NH₄)₂PdX₄ (d=2 und a=b=c=0) oder bevorzugt H₂PdX₄ (a=2 und b=c=d=0), bedeutet.

5. Verfahren nach einem der vorhergehenden Ansprüche, wobei es sich bei der -CHR4-Gruppe um -CH₂- handelt.

6. Verfahren nach einem der vorhergehenden Ansprüche, wobei X Chlor (Cl) bedeutet

7. Verfahren nach einem der vorhergehenden Ansprüche, wobei R5 Methyl bedeutet.

8. Verfahren nach Anspruch 7, wobei CR1R2=CR3-CHR4-Si(R5)₃ ausgewählt ist aus der Gruppe bestehend aus den sieben Verbindungen

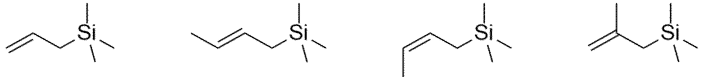

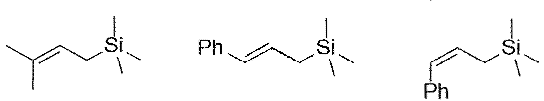

9. Verfahren nach Anspruch 8, wobei es sich bei CR1R2=CR3-CHR4-Si(R5)₃ um Allyltrimethylsilan handelt.

10. Verfahren nach einem der Ansprüche 2 bis 9, wobei während des in Kontakt Bringens der beiden Reaktanden Maßnahmen zur Verhinderung eines Temperaturanstiegs der im Reaktionsgefäß sich bildenden bzw. gebildeten Reaktionsmischung auf über 50°C ergriffen werden.

11. Verfahren nach einem der vorhergehenden Ansprüche, wobei nach Beendigung der Reaktion das entsprechende gebildete Reaktionsprodukt [(η³-CR1R2-CR3-CHR4)PdX]₂ als Feststoff mittels Fest-Füssig-Trennverfahren abgetrennt wird und die vom Feststoff befreite Zusammensetzung aufkonzentriert oder vollständig eingedampft wird unter Erhalt von weiterem festen [(η³-CR1R2-CR3-CHR4)PdX]₂.

12. Verfahren nach einem der Ansprüche 1 bis 10, wobei im Falle, dass das entsprechende gebildete Reaktionsprodukt [(η³-CR1R2-CR3-CHR4)PdX]₂ nicht als Feststoff anfällt, die nach Reaktionsende erhaltene Zusammensetzung aufkonzentriert oder vollständig eingedampft wird unter Gewinnung von festem [(η³-CR1R2-CR3-CHR4)PdX]₂.
